# EUROPÄISCHE PATENTSCHRIFT

(11) **EP 1 206 969 B1**
(45) Veröffentlichungstag und Bekanntmachung des Hinweises auf die Patenterteilung: **08.03.2006**
(21) Anmeldenummer: 01124922.4
(22) Anmeldetag: 19.10.2001
(51) Int. Cl.: B01L 7/00, B01L 3/00, B01L 3/02

(54) **Verfahren und Vorrichtung zum Temperieren von Proben**
Method and device for tempering samples
Méthode et dispositif pour tempérer des échantillons

(30) Priorität: 03.11.2000 DE 10054487
(43) Veröffentlichungstag der Anmeldung: 22.05.2002
(73) Patentinhaber: EPPENDORF AG, 22339 Hamburg (DE)
(72) Erfinder: Treptow, Rainer, 22844 Norderstedt (DE)
(74) Vertreter: Hauck, Graalfs, Wehnert, Döring, Siemons

(56) Entgegenhaltungen:
- WO-A-98/24548
- WO-A-99/61578
- DE-A- 3 132 926
- GB-A- 2 333 250

## Beschreibung

Die Erfindung bezieht sich auf ein Verfahren und auf eine Vorrichtung zum Temperieren von Proben.

Das Verfahren und die Vorrichtung werden insbesondere zum Temperieren von Proben im Labor eingesetzt. Bei den Proben handelt es sich vornehmlich um flüssige Proben. Grundsätzlich kann sich das Verfahren und die Vorrichtung aber auch auf feste oder auf gasförmige Proben beziehen oder auf mehrphasige Proben, beispielsweise auf Suspensionen oder Emulsionen.

Derartige Proben werden im Labor häufig in Einmalartikeln behandelt, transportiert bzw. gelagert. So dienen Pipettenspitzen oder Spritzen aus Kunststoff dem Dosieren und Transportieren von Proben. Küvetten aus Kunststoff werden für photometrische Messungen herangezogen, aber auch zum Temperieren in Temperiervorrichtungen, durch die den Küvetten von außen Wärme zugeführt wird. Dementsprechend ist es auch schon bekannt, Reaktionsgefäße und Zentrifugengefäße aus Kunststoff in Temperiervorrichtungen von außen zu temperieren. Gleiches gilt für Mikrotiterplatten, die mittels eines externen Inkubators bzw. Thermostaten temperierbar sind.

Diesen bekannten Temperiertechniken ist gemeinsam, daß der wärmetechnisch als Isolator zu betrachtende Einmalartikel durch eine ihn umschließende Form und diese durch ein Heizelement erwärmt wird. Durch diese beiden Wärmeübergänge ist die Temperierung verhältnismäßig langsam, ungenau, wenig effektiv und in der Regel aufwendig. Es besteht jedoch insbesondere ein Bedürfnis, das Temperieren und andere Behandlungen innerhalb eines Ablaufes zeitsparend und genau auszuführen.

Außerdem ist bei der Entnahme z.B. einer Mikrotiterplatte aus einer externen Temperiervorrichtung nachteilig, daß die Temperatur bis zur weiteren Verwendung einbricht, wodurch diese beeinträchtigt werden kann.

Es ist bereits bekannt, die Wärmeübertragung in Mikrotiterplatten für die PCR zu beschleunigen, indem man die Wandstärke des Materials verringert. Dem sind jedoch Grenzen gesetzt.

Aus der WO 97/26993 ist ein Verfahren und eine Vorrichtung zum Aufheizen von Proben in Aufnahmen eines Probenträgers bekannt. Der Probenträger ist eine metallische Platte. Er ist entweder als vollwandiger Silberblock ausgeführt oder als Kunststoffträger, auf dem eine Metallschicht abgelagert ist. Der Probenträger wird durch Widerstandsheizung erwärmt. Da in dem Metall hohe Ströme fließen, wird empfohlen, den Probenträger aus einem hochbelastbaren Sekundärkreis eines Transformators zu speisen, bei dem der Querschnitt der Sekundärwicklung beträchtlich größer als der Querschnitt des Probenträgers ist, so daß eine erhebliche Wärmeerzeugung nur im Probenträger auftritt. Außerdem kann der Strom leicht über die Primärwicklung, in der der Strom klein ist, mittels Tyristoren, Triacs oder anderen Vorrichtungen gesteuert werden. Statt dessen kann die Primärwicklung auch über ein Hochfrequenzschaltnetzteil betrieben werden, um den in der Sekundärwicklung induzierten Strom in demselben Ausmaß zu steuern. Dieses Aufheizen von Proben ist apparativ sehr aufwendig.

Davon ausgehend liegt der Erfindung die Aufgabe zugrunde, ein Verfahren und eine Vorrichtung zum schnelleren, genaueren, effektiveren und weniger aufwendigen Temperieren von Proben zu schaffen.

Die Aufgabe wird durch ein Verfahren mit den Merkmalen des Anspruches 1 und durch eine Vorrichtung mit den Merkmalen des Anspruches 21 gelöst. Vorteilhafte Ausgestaltungen des Verfahrens und der Vorrichtung sind in den Unteransprüchen angegeben.

Bei dem erfindungsgemäßen Verfahren zum Temperieren zumindest einer Probe wird an ein elektrisch leitfähiges Material auf Kunststoffbasis eines zumindest teilweise aus diesem Material bestehenden Probenträgers für mindestens eine Probe ein elektrischer Strom und/oder eine elektrische Spannung angelegt, der/die eine Widerstandserwärmung zumindest eines Teils des elektrisch leitfähigen Materials auf Kunststoffbasis bewirkt, durch die eine auf dem Probenträger angeordnete Probe erwärmt wird.

Die erfindungsgemäße Vorrichtung zum Temperieren zumindest einer Probe, insbesondere unter Durchführung des vorerwähnten Verfahrens, hat
- einen zumindest teilweise aus einem elektrisch leitfähigen Material auf Kunststoffbasis bestehenden Probenträger für mindestens eine Probe und
- eine Einrichtung zum Anlegen eines elektrischen Stromes und/oder einer elektrischen Spannung an das elektrisch leitfähige Material auf Kunststoffbasis, um eine Widerstandserwärmung zumindest eines Teils des elektrisch leitfähigen Materials auf Kunststoffbasis zu bewirken, die eine auf dem Probenträger angeordnete Probe erwärmt.

Durch Anlegen eines elektrischen Stromes und/oder einer elektrischen Spannung an das elektrisch leitfähige Material auf Kunststoffbasis wird eine Widerstandserwärmung bewirkt, durch die eine in der Aufnahme enthaltene Probe erwärmt wird. Es versteht sich, daß hierfür das elektrisch leitfähige Material auf Kunststoffbasis zwischen den Stellen, an denen der elektrische Strom und/oder die elektrische Spannung angelegt wird, einen Widerstand aufweist, der die für die angestrebte Erwärmung der Probe erforderliche Widerstandserwärmung zur Folge hat. Insbesondere durch die Zusammensetzung des elektrisch leitfähigen Materials auf Kunststoffbasis ist es möglich, den betreffenden Widerstand zu variieren, wobei eine sehr gute Reproduzierbarkeit des Widerstandes erreichbar ist. Im Unterschied zu dem bekannten metallischen Probenträger ist der Widerstand so wählbar, daß für die Widerstandsheizung verhältnismäßig geringe Ströme benötigt werden. Der Aufwand für die Strom- und/oder Spannungsversorgung ist hierdurch vergleichbar gering.

Für den Probenträger können beispielsweise bereits bekannte Pipettenspitzen aus Kunststoff herangezogen werden, die durch Einlagerung von Graphit in den Kunststoff elektrisch leitfähig sind, um das Eintauchen in eine Flüssigkeit zu detektieren. Natürlich kann eine Pipettenspitze auch speziell für die Ausführung der Erfindung konstruiert sein.

Die Erfindung ist aber auch zur Temperierung anderer Probenträger geeignet, die Speichervolumen oder Speicherplätze für die Proben aufweisen können. Zur ersten Gruppe gehören insbesondere Spritzen, Küvetten, Reaktionsgefäße, Zentrifugiergefäße oder Mikrotiterplatten. Zur zweiten Gruppe gehören insbesondere Teststreifen oder Biochips.

Teststreifen weisen mindestens ein Substrat auf, das mit einer Probe benetzbar ist, um durch eine Reaktion mit dem Substrat, die beispielsweise durch einen Farbumschlag erkennbar ist, einen Nachweis zu führen. Bio-Chips haben ein Substrat aus Silicium, Glas oder Kunststoff oder aus einem anderen Material, auf dem eine Vielzahl verschiedener DNA-Proben (z.B. etwa 1 Million) aufgetragen ist. Diese Testsequenzen können in einem einzigen Arbeitsgang simultan auf ihre Übereinstimmung mit den entsprechenden Sequenzen des Erbgutes eines Probanden überprüft werden. Übereinstimmung ist gegeben, soweit DNA-Einzelstränge einen Doppelstrang bilden (Hybridisierung). Die Bindung der mit Fluoreszensstoffen markierten DNA an bestimmte Zielfelder auf dem Chip kann automatisch durch konfokale Fluoreszenzmikroskopie registriert werden.

Der Probenträger kann insbesondere so ausgeführt sein, daß er nur eine der obigen Funktionen aufweist. Er kann aber auch mehrere Funktionen kombinieren. Vorzugsweise ist der Probenträger als Einmalartikel ausgeführt. Es kann sich bei dem Probenträger aber auch um einen Artikel für mehrmalige Verwendung handeln.

Durch die Erfindung wird eine schnelle, direkte und preiswerte Temperierung von Proben ermöglicht. Diese kann vorteilhaft auch als Behandlungsschritt in einem Ablauf stattfinden, insbesondere zeitversetzt zu einem anderen Behandlungsvorgang oder gleichzeitig mit diesem. So kann beispielsweise in einer Pipettenspitze oder in einer Spritze gleichzeitig, zeitversetzt oder überlappend eine Temperierung und eine Dosierung stattfinden. Auch ist häufig eine Temperierung bei spektroskopischen Messungen in Küvetten erforderlich. Gerade hier hat ein durch Kohlenstoff schwarz gefärbtes Material den Vorteil, daß es einen guten Schutz gegen Störlicht gibt. Bei Küvetten müssen natürlich die Lichtdurchgänge transparent sein, so daß hier auch transparente Materialien zum Einsatz kommen können. Fluoreszenztiterplatten können jedoch vollständig schwarz ausgeführt sein, falls hier eine Messung durch die oberseitigen Öffnungen der Aufnahmen stattfindet. Es ist zu erwarten, daß die optische Schutzwirkung des Kohlenstoffes noch besser als die einfache schwarze Einfärbung der bekannten Fluoreszenztiterplatten ist. In Titerplattenautomaten können in einer oder in mehreren Titerplatten gleichzeitig Temperierungen und andere Behandlungen von Proben stattfinden.

Darüber hinaus ermöglicht die Erfindung eine Fortsetzung der Temperierung einer Probe auch nach Entnahme der Probe aus einer Temperiervorrichtung, sofern die Strom- bzw. Spannungsversorgung des Probenträgers sichergestellt wird. Dies ist beispielsweise bei Pipettenspitzen möglich, die an Pipettierautomaten angebracht sind, um dort Proben zu transferieren. Grundsätzlich ermöglicht die Erfindung aber auch eine permanente Temperierung von Pipettenspitzen, die mit einer Handpipette verbunden sind.

Einbezogen in die Erfindung ist auch eine Anwendung, bei der der Probenträger eine Vorrichtung mit einer Anlagefläche zum Anlegen und Temperieren eines unmittelbar die Probe enthaltenden weiteren Probenträgers ist, d.h. die Heizfläche einer Temperiervorrichtung. Hierdurch wird der Wärmeübergang von einer Heizwicklung auf die Heizfläche für den weiteren Probenträger vermieden. Natürlich kann auch der weitere Probenträger als erfindungsgemäßer Probenträger ausgestaltet sein, um das Aufheizen beim Anlegen an die Anlagefläche zu unterstützen bzw. nach Abziehen von der Anlagefläche fortzusetzen bzw. die erreichte Temperatur zu halten.

Gemäß einer vorteilhaften Weiterbildung kann der Probenträger elektrische Kontakte und/oder elektrische Leiterbahnen und/oder elektronische Bauelemente umfassen. Die elektrischen Kontakte können insbesondere der widerstandsarmen, definierten Verbindung mit einer elektrischen Strom- und/oder Spannungsquelle dienen. Als elektronische Bauelemente kommen insbesondere Sensoren, beispielsweise für die Temperatur, oder optische Anzeigeelemente, beispielsweise Leuchtdioden, in Betracht. Die Leiterbahnen können insbesondere zur Verbindung elektrischer Kontakte mit dem elektrisch leitfähigen Material auf Kunststoffbasis und/oder der elektronischen Bauelemente miteinander oder mit den vorerwähnten Elementen dienen. Insbesondere bei der Ausführung des Probenträgers als Biochip ist eine Integration von Kontakten und/oder Leiterbahnen und/oder elektronischen Bauelementen auf dem Chip möglich. Die bekannten Fertigungstechniken der Leiterplatten- bzw. der Chipherstellung können herangezogen werden.

Der Probenträger und/oder die Einrichtung zum Anlegen eines Stromes und/oder einer Spannung kann eine oder mehrere Temperaturmeßeinrichtungen aufweisen.

Die Erwärmung und/oder Abkühlung der Probe kann insbesondere durch Integration mindestens eines Temperaturfühlers in den Probenträger und/oder durch Einbringen mindestens eines Temperaturfühlers in die Probe und/oder durch Ermitteln des Innenwiderstandes des elektrisch leitfähigen Materials auf Kunststoffbasis des Probenträgers und/oder durch mindestens einen optischen Temperatursensor ermittelt werden. Auch ist es möglich, zur Temperaturermittlung in den Probenträger Flüssigkeitskristalle zu integrieren, deren optische Eigenschaften sich beim Überschreiten einer bestimmten Temperatur reversibel ändern, so daß sie beispielsweise Licht auf unterschiedliche Weise absorbieren.

Bei dem elektrisch leitfähigen Material auf Kunststoffbasis kann es sich insbesondere um einen elektrisch leitfähigen Kunststoff oder um ein elektrisch leitfähiges Kunststoffgemisch oder um ein Stoffgemisch aus einem oder mehreren Kunststoffen und einem elektrisch leitfähigen Material handeln. Als Kunststoffe kommen insbesondere Polyethylen, Polypropylen und Polycarbonat allein oder in beliebiger Kombination in Betracht. Als elektrisch leitfähiges Material kommen insbesondere elektrisch leitfähige Partikel in Betracht. Dabei kann es sich insbesondere um metallische Partikel handeln, beispielsweise um Aluminiumteilchen. Vorzugsweise handelt es sich dabei jedoch um Teilchen aus Kohlenstoff, insbesondere um Teilchen aus Graphit oder um Kohlenstoffasern. Auch ist es möglich, verschiedene elektrisch leitfähige Materialien in Kombination einzusetzen.

Bei dem Verfahren und der Vorrichtung zum Temperieren ist das elektrisch leitfähige Material auf Kunststoffbasis vorzugsweise integraler Bestandteil des Probenträgers. Aus Herstellungsgründen kann es vorteilhaft sein, wenn der gesamte Probenträger aus dem elektrisch leitfähigen Material auf Kunststoffbasis besteht. Grundsätzlich setzt die Erfindung jedoch lediglich voraus, daß mindestens eine Wand des Probenträgers oder ein Abschnitt oder eine Schicht derselben aus dem elektrisch leitfähigen Material auf Kunststoffbasis besteht. Wie bereits oben erwähnt, können beispielsweise bei Küvetten Abschnitte von Wänden aus einem besonders transparenten Material bestehen. Dieses kann ein anderes Material als ein elektrisch leitfähiges Material sein. Auch ist es möglich, das elektrisch leitfähige Material nur in einer Schicht einer oder mehrerer Wände des Probenträgers vorzusehen, beispielsweise in einer äußeren Schicht, um eine Beeinträchtigung einer Probe, die eine innere Schicht der Wand kontaktiert, durch den elektrischen Strom zu vermeiden.

Gemäß einer Ausgestaltung ist der Probenträger einteilig aus einem oder mehreren Kunststoffmaterialien hergestellt. So kann der Probenträger homogen aus einem elektrisch leitfähigen Material auf Kunststoffbasis hergestellt sein oder nur bereichsweise aus diesem Material bestehen und in den übrigen Bereichen aus einem oder mehreren anderen Materialien. Die anderen Materialien können beispielsweise mehr oder weniger elektrisch isolierende Materialien (z.B. für die Trennung individuell autheizbarer Speicherplätze und/oder Speichervolumina für Proben) und/oder lichtdurchlässige Materialien (z.B. für Küvettenfenster) und/oder stoffdurchlässige Materialien (z.B. für eine Membran für eine Stofftrennung) sein. Einteilig können aus Kunststoff besonders kostengünstig Einmalartikel hergestellt werden. Die Herstellung des Probenträgers ist insbesondere in einem Ein- oder Mehrkomponentenspritzverfahren möglich. Letzteres insbesondere bei Ausführung aus verschiedenen Materialien.

Grundsätzlich kann mit Gleichstrom und/oder Gleichspannung gearbeitet werden, wobei allerdings die Möglichkeit der Beeinträchtigung der Probe beispielsweise durch elektrophoretische Effekte besteht, falls unmittelbarer Kontakt des elektrisch leitfähigen Materials auf Kunststoffbasis mit der Probe besteht. Insbesondere zur Meidung dieser Beeinträchtigung kann auch mit Wechselstrom und/oder Wechselspannung gearbeitet werden.

Die Erfindung bezieht die Möglichkeiten ein, den elektrischen Strom und/oder die elektrische Spannung zu steuern, die an das elektrisch leitfähige Material angelegt wird. Bei konstantem Strom kann die Heizleistung trotz temperaturbedingter Widerstandsänderungen oder variabler Kontaktwiderstände im wesentlichen konstant gehalten werden. Bei konstanter Spannung kann der Widerstand mit zunehmender Erwärmung steigen, so daß der Strom und die Temperatur sinken. Hierdurch ist bei anfänglich steilem Temperaturanstieg eine Temperaturregelung erreichbar. Auch kann eine Umschaltmöglichkeit zwischen stromgesteuertem und spannungsgesteuertem Arbeiten gegeben sein.

Die Erwärmung, d.h. die zeitliche und/oder örtliche Temperaturverteilung in der Probe auf dem Probenträger, ist auf verschiedene Weise beeinflußbar. Oben wurde schon die Beeinflussung durch die Zusammensetzung des elektrisch leitfähigen Materials auf Kunststoffbasis angesprochen. Darüber hinaus ist es möglich, die Erwärmung über die Struktur und weitere Zusammensetzung des Probenträgers zu beeinflussen. Dies ist insbesondere über die Form und Abmessungen des Probenträgers und die Form und Abmessungen von Zonen des Probenträgers aus unterschiedlichen Materialien möglich.

Darüber hinaus ist die Erwärmung der Probe durch Anlegen eines bestimmten Stromes und/oder eines bestimmten Stromverlaufes und/oder einer bestimmten Spannung und/oder eines bestimmten Spannungsverlaufes an bestimmten Stellen des Probenträgers beeinflußbar.

Ferner ist eine gezielte Beeinflussung der Erwärmung in bestimmten Bereichen des Probenträgers dadurch erreichbar, daß bestimmte Ströme und/oder Stromverläufe und/oder bestimmte Spannungen und/oder Spannungsverläufe an mehreren bestimmten Stellen anlegbar sind, um verschiedene Bereiche des Probenträgers aus elektrisch leitfähigem Material auf Kunststoffbasis selektiv anzusteuern. Bei der Ausführung des Probenträgers als Mikrotiterplatte können so verschiedene Aufnahmen der Mikrotiterplatte unterschiedlich temperiert werden. Dies ermöglicht eine besonders einfache Ausführung eines "Gradientencyclers".

In einem "Gradientencycler" können in den verschiedenen Aufnahmen einer Mikrotiterplatte Proben bei unterschiedlichen Temperaturen bzw. Temperaturverläufen behandelt werden, um die optimalen Temperaturen zu ermitteln. Bei bekannten Ausführungen werden hierfür Mikrotiterplatten in Metallblöcke eingesetzt, die Peltier-Elemente für das Aufheizen und Abkühlen der verschiedenen Bereiche der Mikrotiterplatte aufweisen.

Auch bei dem erfindungsgemäßen Probenträger, insbesondere in der Ausführung als Mikrotiterplatte, ist zusätzlich der Einsatz weiterer Heiz- und/oder Kühlelemente möglich, um eine Erwärmung und/oder Abkühlung zu beschleunigen und/oder zu vergleichmäßigen. Als Heiz- und/oder Kühlelemente kommen insbesondere Peltier-Elemente oder Lüfter in Betracht. Da der Probenträger eine Widerstandsheizung aufweist, können Peltier-Elemente auch allein zu Kühlzwecken eingesetzt werden, wodurch deren Lebensdauer verlängert wird. Dies ist besonders vorteilhaft bei der Ausführung eines "Gradientencyclers".

Gemäß einer Ausgestaltung wird die Menge der Probe auf dem Probenträger kapazitiv gemessen. Hierbei wird die Menge einer Probe aufgrund der Beeinflussung der Kapazität eines Kondensators durch Anordnung der Probe zwischen den Platten ermittelt. Das Meßprinzip ist beispielsweise erläutert in O. Limann, Elektronik ohne Ballast, 5. Auflage, Erläuterungen zu Bildern 15.01 bis 15.13. Aufgrund der gemessenen Menge der Probe kann beispielsweise das Temperieren der Probe genauer gesteuert werden. Gemäß einer Ausgestaltung weist der Probenträger mindestens einen kapazitiven Meßwertaufnehmer auf, der einem Speicherplatz und/oder einem Speichervolumen für eine Probe zugeordnet ist. Für die kapazitive Messung wird der kapazitive Meßwertaufnehmer mit einer Kapazitätsmeßschaltung verbunden. Bei der Kapazitätsmeßschaltung kann es sich beispielsweise um eine Brückenschaltung oder um eine Hf-Resonanzschaltung handeln (siehe Limann, aaO, Erläuterungen zu Bildern 15.05 bis 15.09).

Der kapazitive Meßwertaufnehmer kann Kondensatorplatten aus einem elektrisch leitfähigen Material (z.B. Metall) aufweisen, die in den Probenträger integriert sind. Gemäß einer Ausgestaltung weist der kapazitive Meßwertaufnehmer Kondensatorplatten auf, die von einem elektrisch leitfähigen Material auf Kunststoffbasis gebildet werden, aus dem der Probenträger teilweise besteht. Damit kann auch der kapazitive Meßwertaufnehmer einteilig mit dem Probenträger ausgebildet werden. Bei dem elektrisch leitfähigen Material auf Kunststoffbasis kann es sich insbesondere um eines der Materialien handeln, das auch für die Widerstandserwärmung der Probe verwendet werden kann. Vorzugsweise hat das Material der Kondensatorplatten eine viel bessere Leitfähigkeit als das Material für die Widerstandserwärmung. Es versteht sich, daß der Probenträger zwischen den Kondensatorplatten elektrisch isolierendes Material aufweist. Das elektrisch leitfähige Material auf Kunststoffbasis für die Widerstandsheizung kann wiederum von den Kondensatorplatten getrennt angeordnet sein.

Gemäß einer Ausgestaltung wird der Probenträger mittels elektrisch leitfähiger Nadeln kontaktiert, um den elektrischen Strom/die elektrische Spannung für die Widerstandserwärmung an den Probenträger anzulegen und/oder die Kapazitätsmeßschaltung mit dem kapazitiven Meßwertaufnehmer zu verbinden. Die elektrisch leitfähigen Nadeln können zu einem Nadelbettadapter gehören, der endständige Kontakte aufweist, die das elektrisch leitfähige Material auf Kunststoffbasis direkt und/oder mit diesem verbundene Kontakte kontaktieren. Die endständigen Kontaktbereiche können in das Material des Probenträgers eindringen, müssen dies aber nicht, da die Varianz des Übergangswiderstandes unerheblich ist. Die endständigen Kontaktbereiche können spitz, flächig oder kronenartig ausgebildet sein. Die Kontaktflächen des Probenträgers sind gemäß einer Ausgestaltung metallisch beschichtet.

Die Vorrichtung hat vorzugsweise einen die Einrichtungen zum Anlegen eines Stromes und/oder einer Spannung und/oder die Kapazitätsmeßschaltung und/oder den Nadelbettadapter umfassenden Vorrichtungsteil, der vom Probenträgers trennbar ist. Der trennbare Vorrichtungsteil kann stationär und/oder transportabel sein. Dabei kann es sich beispielsweise um eine Pipettiervorrichtung und/oder eine Dosiervorrichtung handeln, die als Handgerät bzw. als stationäres Gerät ausführbar sind. Beispielsweise kann dies ein Spektrometer sein, wenn der Probenbehälter eine Küvette ist. Es kann sich dabei aber auch um eine Einrichtung zum Behandeln von Reaktionsgefäßen (z.B. um einen Thermomixer) und/oder zum Behandeln von Zentrifugengefäßen (z.B. um eine Zentrifuge) und/oder zum Behandeln von Mikrotiterplatten (z.B. um einen Gradientencycler) handeln.

Für das Anlegen des Stromes und/oder der Spannung können der Probenträger und die Einrichtungen zum Anlegen eines Stromes und/oder einer Spannung elektrische Kontakte aufweisen, die schnelle und reproduzierbare elektrische Verbindung gewährleisten, auch wenn die Einrichtungen zum Anlegen eines Stromes und/oder einer Spannung in einem trennbaren Vorrichtungsteil angeordnet sind. Entsprechende Kontakte können gemäß einer Ausgestaltung zum Verbinden des kapazitiven Meßwertaufnehmers mit der Kapazitätsmeßschaltung vorhanden sein. Gemäß Obigem können die elektrischen Kontakte einen Nadelbettadapter umfassen.

Die Einrichtung zum Anlegen eines Stromes und/oder einer Spannung kann eine Gleich- und/oder eine Wechselstrom- und/oder Spannungsquelle aufweisen.

Darüber hinaus kann die Einrichtung zum Anlegen eines Stromes und/oder einer Spannung eine Einrichtung zum Steuern der Erwärmung der Probe umfassen.

Die Erfindung wird nachfolgend anhand der anliegenden Zeichnungen von Ausführungsbeispielen näher erläutert, die grobschematisch eine Pipettenspitze und einen Teil einer Mikrotiterplatte zeigen.

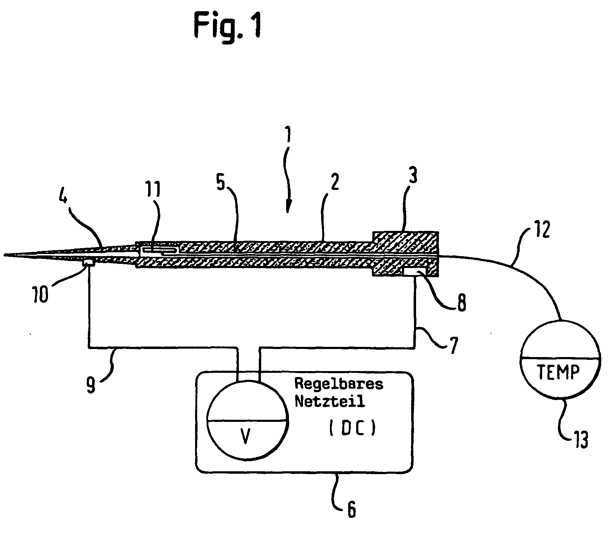

Gemäß Fig. 1 hat eine elektrisch leitfähige Pipettenspitze 1 aus Polypropylen mit eingelagerten Graphitpartikeln einen zylindrischen Schaft 2 mit einem Befestigungsabschnitt 3 an dem einen Ende und einen sich konisch verjüngenden Spitzenabschnitt 4 an dem anderen Ende. In der Pipettenspitze erstreckt sich ein axialer Durchgang 5, der in den beiden Enden mündet und der Aufnahme von Flüssigkeit und eines Luftpolsters zu deren Verdrängung dient.

Ein regelbares Gleichstromnetzteil 6 ist über eine Leitung 7 an einem Kontakt 8 am Befestigungsabschnitt 3 und über eine Leitung 9 an einem Kontakt 10 am Spitzenschaft 4 angeschlossen. Die Kontakte sind zu Versuchszwecken mittels Silberleitlack verwirklicht. Für Massenausführungen kommt vorzugsweise Kupfer in Betracht. Grundsätzlich ist zur Meidung von Kontaktwiderständen eine großflächige Kontaktierung vorteilhaft.

Ein Temperatursensor 11 ist durch die Öffnung am Befestigungsabschnitt 3 in den Durchgang der Pipettenspitze 1 eingeführt und über eine Leitung 12 mit einer Temperaturmeßeinrichtung 13 außerhalb der Pipettenspitze 1 verbunden.

Für Messungen wurde eine elektrisch leitfähige Pipettenspitze 1 der Anmelderin eingesetzt, die bislang lediglich zur Detektion des Flüssigkeitsspiegels verwendet wird. Die eingesetzte Spitze hat ein Fassungsvermögen von 1100 µl und einen Widerstand von weniger als 30 KOhm.

Es wurde festgestellt, daß sich bei einer geregelten Gleichspannung 70 VDC eine stabile Temperatur von ca. 42 °C im Durchgang 5 einstellt.

Bei 80 VDC stellt sich eine Temperatur von ca. 70 °C im Durchgang 5 ein.

Der Temperaturgradient, gemessen durch Anlegen einer Spannung von 80 VDC beträgt ca.:
10°C in 30 Sekunden
30 °C in 90 Sekunden.

Bei einer Temperaturerhöhung um 20 °C erhöht sich der Widerstand um ca. 1,5 KOhm.

Insbesondere durch Veränderung des Kohlenstoffanteiles des Materials der Pipettenspitze 1 und ihrer Geometrie ist es möglich, die Spannung für die Erwärmung zu reduzieren.

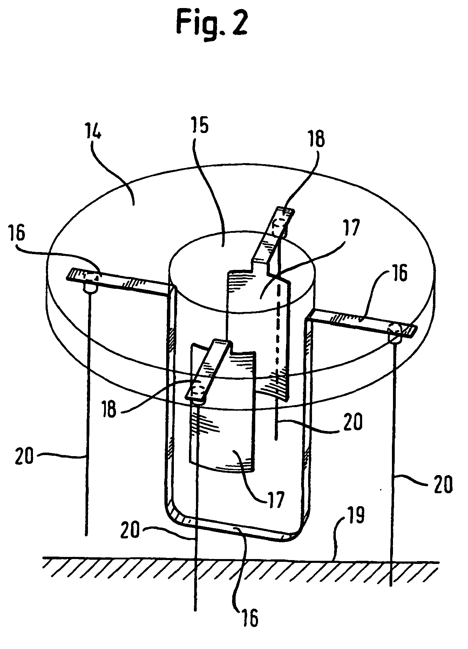

Die Fig. 2 zeigt einen Ausschnitt einer Mikrotiterplatte 14, die im Bereich einer Vertiefung 15 für die Aufnahme von Probenflüssigkeit eine über die Unterseite der Aufnahme 15 und angrenzender planer Bereiche der Mikrotiterplatte 14 verlaufende streifenförmige Bahn 16 aus elektrisch leitfähigem Material auf Kunststoffbasis aufweist.

Ferner sind auf der Unterseite der Aufnahme 15 Kondensatorplatten 17 auf diametral einander gegenüberliegenden Seiten der Aufnahme 15 vorhanden, die senkrecht zu der Bahn 16 ausgerichtet sind. Die Kondensatorplatten 17 bestehen ebenfalls aus einem elektrisch leitfähigen Material auf Kunststoffbasis (können aber auch durch integrierte Metallplatten gebildet sein) und sind elektrisch mit Bahnen 18 aus elektrisch leitfähigem Material auf Kunststoffbasis (oder Metallbändern) verbunden, die auf den angrenzenden ebenen Bereichen der Unterseite der Mikrotiterplatte 14 angeordnet sind.

Zwischen der Bahn 16 und den Kondensatorplatten 17 sowie den Bahnen 18 ist elektrisch isolierendes Material vorhanden.

Entsprechende Bahnen 16, 18 und Kondensatorplatten 17 sind auch an weiteren Aufnahmen 15 der Mikrotiterplatte 14 vorhanden, die in der Zeichnung nicht abgebildet sind. Die Bahnen 16, 18 benachbarter Aufnahmen 15 sind ebenfalls elektrisch voneinander isoliert.

Über einen Nadelbettadapter 19 mit einer Vielzahl parallel gerichteter, hochstehender Nadeln 20 erfolgt eine Kontaktierung der Bahnen 16, 18. Über den Nadelbettadapter wird eine elektrische Spannung/ein elektrischer Strom in die Bahn 16 eingeleitet, um eine Widerstandsheizung zu bewirken. Ferner wird über den Nadelbettadapter eine Kapazitätsmeßschaltung über die Bahnen 18 mit den Kondensatorplatten 17 verbunden. Hierdurch kann zugleich eine Probe in der Aufnahme 15 temperiert und der Füllstand der Probe in der Aufnahme 15 ermittelt werden. Der Füllstand kann wiederum zur Steuerung der Temperierung oder zu anderen Zwecken verwertet werden.

## Patentansprüche

1. Verfahren zum Temperieren und Dosieren zumindest einer Probe, bei dem mittels einer Pipettenspitze oder Spritze (1, 14) eine Probe dosiert und an ein elektrisch leitfähiges Material auf Kunststoffbasis der zumindest teilweise aus diesem Material bestehenden Pipettenspitze oder Spritze (1, 14) ein elektrischer Strom/eine elektrische Spannung angelegt wird, der/die eine Widerstandserwärmung zumindest eines Teils des elektrisch leitfähigen Materials auf Kunststoffbasis bewirkt, durch die die in der Pipettenspitze oder Spritze (1, 14) angeordnete Probe erwärmt wird.

2. Verfahren nach Anspruch 1, bei dem das elektrisch leitfähige Material auf Kunststoffbasis ein elektrisch leitfähige Partikel enthaltendes Kunststoffmaterial enthält.

3. Verfahren nach Anspruch 2, bei dem die Partikel Graphit und/oder Kohlenstofffasem und/oder ein anderes Kohlenstoffinaterial enthalten.

4. Verfahren nach einem der Ansprüche 1 bis 3, bei dem die Partikel mindestens ein Metall enthalten.

5. Verfahren nach einem der Ansprüche 2 bis 4, bei dem das Kunststoffmaterial Polyethylen und/oder Polypropylen und/oder Polycarbonat enthält.

6. Verfahren nach einem der Ansprüche 1 bis 5, bei dem mindestens eine ein Speichervolumen (5, 15) für die Probe begrenzende Wand der Pipettenspitze oder Spritze (1, 15) oder ein Abschnitt oder eine Schicht derselben aus dem elektrisch leitfähigen Material auf Kunststoffbasis besteht.

7. Verfahren nach einem der Ansprüche 1 bis 6, bei dem die Pipettenspitze oder Spritze (1, 14) einteilig aus einem oder mehreren Kunststoffmaterialien hergestellt ist.

8. Verfahren nach einem der Ansprüche 1 bis 7, bei dem die Pipettenspitze oder Spritze (1, 14) in einem Ein- oder Mehrkomponentenspritzverfahren gespritzt ist.

9. Verfahren nach einem der Ansprüche 1 bis 8, bei dem die Pipettenspitze oder Spritze (1, 14) elektrische Kontakte und/oder elektrische Leiterbahnen und/oder elektronische Bauelemente umfaßt.

10. Verfahren nach einem der Ansprüche 1 bis 9, bei dem die Erwärmung und/oder Abkühlung der Probe durch die Zusammensetzung des elektrisch leitfähigen Materials und/oder durch die Formgebung der Pipettenspitze oder Spritze (1, 14) und/oder durch Anlegen eines bestimmten Stromes und/oder eines bestimmten Stromverlaufes an bestimmten Stellen und/oder durch Anlegen mehrerer bestimmter Ströme und/oder Stromverläufe an mehreren bestimmten Stellen und/oder durch Anlegen einer bestimmten Spannung und/oder eines bestimmten Spannungsverlaufs an bestimmten Stellen und/oder durch Anlegen mehrerer bestimmter Spannungen und/oder Spannungsverläufe an mehreren bestimmten Stellen und/oder durch Einsatz einer Kühleinrichtung gesteuert wird.

11. Verfahren nach einem der Ansprüche 1 bis 10, bei dem die Erwärmung und/oder Abkühlung der Probe durch Einbringen mindestens eines Temperatursensors (11) in die Probe und/oder durch Integration mindestens eines Temperatursensors in die Pipettenspitze oder Spritze (1, 14) und/oder durch mindestens einen optischen Temperatursensor und/oder durch Ermitteln des Innenwiderstandes der Pipettenspitze oder Spritze (1, 14) ermittelt wird.

12. Verfahren nach einem der Ansprüche 1 bis 11, bei dem an die Pipettenspitze oder Spritze (1, 14) mindestens ein Gleichstrom und/oder mindestens ein Wechselstrom und/oder mindestens eine Gleichspannung und/oder mindestens eine Wechselspannung angelegt wird.

13. Verfahren nach einem der Ansprüche 1 bis 12, bei dem die Probe auf derselben Pipettenspitze oder Spritze (1, 14) vor und/oder während und/oder nach dem Erwärmen weiter behandelt und/oder transportiert und/oder gelagert wird.

14. Verfahren nach einem der Ansprüche 1 bis 13, bei dem die Menge der Probe auf der Pipettenspitze oder Spritze (14) kapazitiv gemessen wird.

15. Verfahren nach Anspruch 14, bei dem für die kapazitive Messung mindestens einem Speichervolumen (15) für Probe zugeordneter kapazitiver Meßwertaufnehmer (17) der Pipettenspitze oder Spritze (14) mit einer Kapazitätsmeßschaltung verbunden wird.

16. Verfahren nach Anspruch 15, bei dem für die kapazitive Messung Kondensatorplatten (17), die von dem elektrisch leitfähigen Material auf Kunststoffbasis gebildet werden, aus dem die Pipettenspitze oder Spritze (14) teilweise besteht, mit der Kapazitätsmeßschaltung verbunden werden.

17. Verfahren nach einem der Ansprüche 1 bis 16, bei dem die Pipettenspitze oder Spritze (14) mittels elektrisch leitfähiger Nadeln (20) kontaktiert wird, um den elektrischen Strom/die elektrische Spannung für die Widerstandserwärmung an die Pipettenspitze oder Spritze (14) anzulegen und/oder die Kapazitätsmeßschaltung mit dem kapazitiven Meßwertaufnehmer (17) zu verbinden.

18. Verfahren nach einem der Ansprüche 1 bis 17, bei dem die Pipettenspitze oder Spritze (1, 14) nach Benutzung weggeworfen und/oder gereinigt und/oder wiederverwendet wird.

19. Vorrichtung zum Temperieren und Dosieren mindestens einer Probe, insbesondere unter Durchführung des Verfahrens nach einem der Ansprüche 1 bis 20, mit
- einer zumindest teilweise aus einem elektrisch leitfähigen Material auf Kunststoffbasis bestehenden Pipettenspitze oder Spritze (1, 14) für eine Probe und
- einer Einrichtung (6, 7, 9) zum Anlegen eines elektrischen Stromes und/oder einer elektrischen Spannung an das elektrisch leitfähige Material auf Kunststoffbasis, um eine Widerstandserwärmung zumindest eines Teils des elektrisch leitfähigen Materials auf Kunststoffbasis zu bewirken, die eine in der Pipettenspitze oder Spritze (1, 14) angeordnete Probe erwärmt.

20. Vorrichtung nach Anspruch 19, bei der mindestens eine ein Speichervolumen (5, 15) für eine Probe begrenzende Wand der Pipettenspitze oder Spritze (1, 14) oder ein Abschnitt oder eine Schicht derselben aus dem elektrisch leitfähigen Material auf Kunststoffbasis besteht.

21. Vorrichtung nach Anspruch 19 oder 20, bei der die Pipettenspitze oder Spritze (14) mindestens ein einem Speichervolumen (15) für Probe zugeordneten kapazitiven Meßwertaufnehmer (17) für eine Messung der Menge der mindestens einen Probe und eine mit dem kapazitiven Meßwertaufnehmer (17) verbundene Kapazitätsmeßschaltung aufweist.

22. Vorrichtung nach einem der Ansprüche 19 bis 21, bei der der kapazitive Meßwertaufnehmer Kondensatorplatten (17) aufweist, die von einem elektrisch leitfähigen Material auf Kunststoffbasis gebildet werden, aus dem die Pipettenspitze oder Spritze (14) teilweise besteht.

23. Vorrichtung nach einem der Ansprüche 19 bis 22, bei der die Pipettenspitze oder Spritze (1, 14) aus einem oder mehreren einteilig miteinander verbundenen Kunststoffmaterialien besteht.

24. Vorrichtung nach einem der Ansprüche 19 bis 23, bei der die Pipettenspitze oder Spritze (1, 14) und die Einrichtungen (6, 7, 9) zum Anlegen eines elektrischen Stromes und/oder einer elektrischen Spannung und/oder die Kapazitätsmeßschaltung elektrische Kontakte (8, 9) aufweisen, über die mindestens ein elektrischer Strom und/oder eine elektrische Spannung an die Pipettenspitze oder Spritze (1, 14) anlegbar ist und/oder über die die Kapazitätsmeßschaltung mit dem kapazitiven Meßwertaufnehmer (17) verbindbar ist.

25. Vorrichtung nach einem der Ansprüche 19 bis 24, bei der die Einrichtungen (6, 7, 9) zum Anlegen eines elektrischen Stromes und/oder einer elektrischen Spannung und/oder die Kapazitätsmeßschaltung über einen Nadelbettadapter (19) mit der Pipettenspitze oder Spritze (1, 14) verbindbar ist.

26. Vorrichtung nach einem der Ansprüche 19 bis 25, die einen die Einrichtung (6, 7, 9) zum Anlegen eines elektrischen Stromes und/oder einer elektrischen Spannung und/oder die Kapazitätsmeßschaltung und/oder den Nadelbettadapter (19) umfassenden, von der Pipettenspitze oder Spritze (1, 14) trennbaren Vorrichtungsteil aufweist.

27. Vorrichtung nach einem der Ansprüche 19 bis 26, bei der der trennbare Vorrichtungsteil (6, 7, 9) stationär und/oder transportabel ist.

28. Vorrichtung nach Anspruch 26 oder 27, bei der der trennbare Vorrichtungsteil (6, 7, 9) eine Pipettiervorrichtung und/oder eine Dosiervorrichtung und/oder ein Spektrometer umfaßt.

29. Vorrichtung nach einem der Ansprüche 19 bis 28, bei der die Einrichtung (6, 7, 9) zum Anlegen eines elektrischen Stromes und/oder einer elektrischen Spannung eine Gleich- und/oder Wechselstromquelle und/oder eine Gleich- und/oder Wechselspannungsquelle aufweisen.

30. Vorrichtung nach einem der Ansprüche 19 bis 29, bei der die Pipettenspitze oder Spritze (1, 14) und/oder die Einrichtung (6, 7, 9) zum Anlegen eines elektrischen Stromes und/oder einer elektrischen Spannung eine oder mehrere Temperaturmeßeinrichtungen (11, 12, 13) aufweist/aufweisen.

31. Vorrichtung nach einem der Ansprüche 19 bis 30, bei der die Einrichtung (6, 7, 9) zum Anlegen eines elektrischen Stromes und/oder einer elektrischen Spannung eine Einrichtung zum Steuern der Erwärmung der Probe aufweist.

## Claims

1. A method for tempering and proportioning at least one sample wherein a sample is proportioned by means of a pipette tip or a syringe (1, 14) and an electric current/an electric voltage is applied to a plastic-based electrically conductive material of the pipette tip or the syringe (1, 14) consisting at least partially of this material which causes a resistance heating of at least one portion of the plastic-based electrically conductive material, which resistance heating heats a sample disposed in the pipette tip or in the syringe (1,14).

2. The method according to claim 1 wherein the plastic-based electrically conductive material contains a plastic material containing electrically conductive particles.

3. The method according to claim 2 wherein the particles contain graphite and/or carbon fibres and/or another carbon material.

4. The method according to any one of claims 1 to 3 wherein the particles contain at least one metal.

5. The method according to any one of claims 2 to 4 wherein the plastic material contains polyethylene and/or polypropylene and/or polycarbonate.

6. The method according to any one of claims 1 to 5 wherein at least one wall of the pipette tip or syringe (1, 15) defining a storage volume (5, 15) for the sample or a portion or layer thereof is made of the plastic-based electrically conductive material.

7. The method according to any one of claims 1 to 6 wherein the pipette tip or syringe (1, 14) is integrally made of one or more plastic materials.

8. The method according to any one of claims 1 to 7 wherein the pipette tip or syringe (1, 14) is moulded in a single-component or multi-component injection molding process.

9. The method according to any one of claims 1 to 8 wherein the pipette tip or syringe (1, 14) comprises electric contacts and/or electric printed conductors and/or electronic components.

10. The method according to any one of claims 1 to 9 wherein the heating and/or cooling of the sample is controlled by the composition of the electrically conductive material and/or the shape given to the pipette tip or syringe (1, 14) and/or by applying a certain current and/or a certain course of current at certain points and/or by applying several certain currents and/or courses of current at several certain points and/or by applying a certain voltage and/or a certain course of voltage at certain points and/or by applying several certain voltages and/or courses of voltage at several certain points and/or by using a cooling apparatus.

11. The method according to any one of claims 1 to 10 wherein the heating and/or cooling of the sample is determined by installing at least one temperature sensor (11) in the sample and/or integrating at least one temperature sensor in the pipette tip or syringe (1, 14) and/or at least one optical temperature sensor and/or by determining the internal resistance of the pipette tip or syringe (1, 14).

12. The method according to any one of claims 1 to 11 wherein at least one direct current and/or at least one alternating current and/or at least one direct voltage and/or at least one alternating voltage is applied to the pipette tip or syringe (1, 14).

13. The method according to any one of claims 1 to 12 wherein the sample is further treated and/or transported and/or stored on the same pipette tip or syringe (1, 14) prior to and/or during and/or after heating.

14. The method according to any one of claims 1 to 13 wherein the volume of the sample is capacitively measured on the pipette tip or syringe (14).

15. The method according to claim 14 wherein at least one capacitive measuring sensor (17) of the pipette tip or syringe (14) which is associated with a storage volume (15) for a sample is connected to a capacitance measuring circuit for a capacitive measurement.

16. The method according to claim 15 wherein capacitor plates (17) formed by the plastic-based electrically conductive material of which the pipette tip or syringe (14) is partially made are connected to the capacitance measuring circuit for a capacitive measurement.

17. The method according to any one of claims 1 to 16 wherein the pipette tip or syringe (14) is contacted by means of electrically conductive needles (20) in order to apply the electric current/the electric voltage to the pipette tip or syringe (14) for resistance heating and/or to connect the capacitance measuring circuit to the capacitive measuring sensor (17).

18. The method according to any one of claims 1 to 17 wherein the pipette tip or syringe (1, 14) is discarded after use and/or is cleaned and/or is re-used.

19. A apparatus for tempering and proportioning at least one sample, particulary by performing the method according to any one of claims 1 to 18, comprising
- a pipette tip or syringe (1, 14) made of a plastic-based, at least partially conductive material for a sample, and
- a device (6, 7, 9) for applying an electric current and/or an electric voltage to the plastic-based electrically conductive material in order to cause a resistance heating of at least some part of the plastic-based electrically conductive material, which heating heats a sample disposed in the pipette tip or syringe (1, 14).

20. The apparatus according to claim 19 wherein at least one wall of the pipette tip or syringe (1, 14) defining a storage volume (5, 15) for the sample or a portion or a layer thereof is made of the plastic-based electrically conductive material.

21. The apparatus according to claim 19 or 20 wherein the pipette tip or syringe (14) has at least one capacitive measuring sensor (17) associated with a storage volume (15) for a sample to measure the volume of the at least one sample and a capacitance measuring circuit connected to the capacitive measuring sensor (17).

22. The apparatus according to any one of claims 19 to 21 wherein the capacitive measuring sensor has capacitor plates (17) which are formed from a plastic-based electrically conductive material of which the pipette tip or syringe (14) is partially made.

23. The apparatus according to any one of claims 19 to 22 wherein the pipette tip or syringe (1, 14) is made of one or more integrally interconnected plastic materials.

24. The apparatus according to any one of claims 19 to 23 wherein the pipette tip or syringe (1, 14) and the devices (6, 7, 9) for applying an electric current and/or an electric voltage and/or the capacitance measuring circuit have electric contacts (8, 9) via which at least one electric current and/or an electric voltage can be applied to the pipette tip or syringe (1, 14) and/or is adapted to be connected to the capacitive measuring sensor (17) via the capacitance measuring circuit.

25. The apparatus according to any one of claims 19 to 24 wherein the devices (6, 7, 9) for applying an electric current and/or an electric voltage and/or the capacitance measuring circuit are adapted to be connected to the pipette tip or syringe (1, 14) via a needle bed adapter (19).

26. The apparatus according to any one of claims 19 to 25 which has an apparatus portion which comprises the device (6, 7, 9) for applying an electric current and/or an electric voltage and/or the capacitance measuring circuit and/or the needle bed adapter (19) and is separable from the pipette tip or syringe (1, 14).

27. The apparatus according to any one of claims 19 to 26 wherein the separable apparatus portion (6, 7, 9) is stationary and/or portable.

28. The apparatus according to claim 26 or 27 wherein the separable apparatus portion (6, 7, 9) comprises a pipetting device and/or a proportioning device and/or a spectrometer.

29. The apparatus according to any one of claims 19 to 28 wherein the device (6, 7, 9) for applying an electric current and/or an electric voltage has a direct-current source and/or an alternating-current source and/or a direct voltage and/or an alternating-current source.

30. The apparatus according to any one of claims 19 to 29 wherein the pipette tip or syringe (1,14) and/or the device (6, 7, 9) for applying an electric current and/or an electric voltage have one or more temperature measuring devices (11, 12, 13).

31. The apparatus according to any one of claims 19 to 30 wherein the device (6, 7, 9) for applying an electric current and/or an electric voltage has a device for controlling the heating of the sample.

## Revendications

1. Méthode pour tempérer et doser au moins un échantillon, dans laquelle, au moyen d'une pointe de pipette ou d'une seringue (1, 14), un échantillon est dosé et un courant électrique/une tension électrique est appliqué(e) à un matériau électriquement conducteur à base de matière plastique de la pointe de pipette ou de la seringue (1, 14) composée au moins partiellement de ce matériau, lequel courant/laquelle tension provoque un chauffage ohmique d'au moins une partie du matériau électriquement conducteur à base de matière plastique, lequel chauffage chauffe l'échantillon disposé dans la pointe de pipette ou la seringue (1, 14).

2. Méthode selon la revendication 1, dans laquelle le matériau électriquement conducteur à base de matière plastique contient un matériau en matière plastique contenant des particules électriquement conductrices.

3. Méthode selon la revendication 2, dans laquelle les particules contiennent du graphite et/ou des fibres de carbone et/ou un autre matériau carboné.

4. Méthode selon une des revendications 1 à 3, dans laquelle les particules contiennent au moins un métal.

5. Méthode selon une des revendications 2 à 4, dans laquelle le matériau en matière plastique contient du polyéthylène et/ou du polypropylène et/ou du polycarbonate.

6. Méthode selon une des revendications 1 à 5, dans laquelle au moins une paroi de la pointe de pipette ou de la seringue (1, 15) délimitant un volume de stockage (5, 15) pour l'échantillon, ou un tronçon ou une couche de celle-ci, se compose du matériau électriquement conducteur à base de matière plastique. ci, se compose du matériau électriquement conducteur à base de matière plastique.

7. Méthode selon une des revendications 1 à 6, dans laquelle la pointe de pipette ou la seringue (1, 14) est réalisée d'une seule pièce en un ou plusieurs matériaux en matière plastique.

8. Méthode selon une des revendications 1 à 7, dans laquelle la pointe de pipette ou la seringue (1, 14) est moulée par injection dans un procédé de moulage par injection à un ou à plusieurs composants.

9. Méthode selon une des revendications 1 à 8, dans laquelle la pointe de pipette ou la seringue (1, 14) comprend des contacts électriques et/ou des pistes de conducteurs électriques et/ou des composants électroniques.

10. Méthode selon une des revendications 1 à 9, dans laquelle le chauffage et/ou le refroidissement de l'échantillon est piloté par la composition du matériau électriquement conducteur et/ou par le façonnage de la pointe de pipette ou de la seringue (1, 14) et/ou par l'application d'un courant défini et/ou d'une courbe de courant définie dans des emplacements définis et/ou par l'application de plusieurs courants et/ou courbes de courant défini(e)s dans plusieurs emplacements définis et/ou par l'application d'une tension définie et/ou d'une courbe de tension définie dans des emplacements définis et/ou par l'application de plusieurs tensions et/ou courbes de tension définies dans plusieurs emplacements définis et/ou par la mise en oeuvre d'un équipement de refroidissement.

11. Méthode selon une des revendications 1 à 10, dans laquelle le chauffage et/ou le refroidissement de l'échantillon est déterminé par l'installation d'au moins un capteur de température (11) dans l'échantillon et/ou par l'intégration d'au moins un capteur de température dans la pointe de pipette ou la seringue (1, 14) et/ou par au moins un capteur de température optique et/ou par la détermination de la résistance interne de la pointe de pipette ou de la seringue (1,14).

12. Méthode selon une des revendications 1 à 11, dans laquelle au moins un courant continu et/ou au moins un courant alternatif et/ou au moins une tension continue et/ou au moins une tension alternative est appliqué(e) à la pointe de pipette ou à la seringue (1, 14).

13. Méthode selon une des revendications 1 à 12, dans laquelle l'échantillon sur la même pointe de pipette ou la seringue (1, 14), avant et/ou pendant et/ou après le chauffage, est encore traité et/ou transporté et/ou entreposé.

14. Méthode selon une des revendications 1 à 13, dans laquelle la quantité de l'échantillon sur la pointe de pipette ou la seringue (14) est mesurée de façon capacitive.

15. Méthode selon la revendication 14, dans laquelle, pour la mesure capacitive, au moins un enregistreur capacitif de valeurs de mesure (17) de la pointe de pipette ou de la seringue (14) affecté à un volume de stockage (15) pour l'échantillon est connecté à un circuit de mesure de capacité.

16. Méthode selon la revendication 15, dans laquelle, pour la mesure capacitive, des plaques de condensateur (17), qui sont constituées du matériau électriquement conducteur à base de matière plastique dont est composée partiellement la pointe de pipette ou la seringue (14), sont connectées au circuit de mesure de capacité.

17. Méthode selon une des revendications 1 à 16, dans laquelle la pointe de pipette ou la seringue (14) est mise en contact au moyen d'aiguilles électriquement conductrices (20) pour appliquer à la pointe de pipette ou à la seringue (14) le courant électrique et/ou la tension électrique pour le chauffage ohmique et/ou pour connecter le circuit de mesure de capacité à l'enregistreur capacitif de valeurs de mesure (17).

18. Méthode selon une des revendications 1 à 17, dans laquelle la pointe de pipette ou la seringue (1, 14) sont, après usage, jetées et/ou nettoyées et/ou réutilisées.

19. Dispositif pour tempérer et doser au moins un échantillon, en particulier en utilisant la méthode selon une des revendications 1 à 20, avec
- une pointe de pipette ou seringue (1, 14) pour un échantillon composée au moins partiellement d'un matériau électriquement conducteur à base de matière plastique et
- un équipement (6, 7, 9) pour l'application d'un courant électrique et/ou d'une tension électrique au matériau électriquement conducteur à base de matière plastique afin de provoquer un chauffage ohmique d'au moins une partie du matériau électriquement conducteur à base de matière plastique qui chauffe un échantillon disposé dans la pointe de pipette ou la seringue (1, 14).

20. Dispositif selon la revendication 19, dans lequel au moins une paroi de la pointe de pipette ou de la seringue (1, 14) délimitant un volume de stockage (5, 15) pour un échantillon, ou un tronçon ou une couche de celle-ci, est constitué(e) du matériau électriquement conducteur à base de matière plastique.

21. Dispositif selon la revendication 19 ou 20, dans lequel la pointe de pipette ou la seringue (14) présente au moins un enregistreur capacitif de valeurs de mesure (17) affecté à un volume de stockage (15) pour échantillon, pour une mesure de la quantité d'au moins un échantillon, et un circuit de mesure capacitive connecté à un enregistreur capacitif de valeurs de mesure (17).

22. Dispositif selon une des revendications 19 à 21, dans lequel l'enregistreur capacitif de valeurs de mesure présente des plaques de condensateur (17) qui sont constituées d'un matériau électriquement conducteur à base de matière plastique dont est partiellement composée la pointe de pipette ou la seringue (14).

23. Dispositif selon une des revendications 19 à 22, dans lequel la pointe de pipette ou la seringue (1, 14) est composée d'un ou de plusieurs matériaux de matière plastique raccordés entre eux pour former une seule pièce.

24. Dispositif selon une des revendications 19 à 23, dans lequel la pointe de pipette ou la seringue (1, 14) et les équipements (6, 7, 9) pour l'application d'un courant électrique et/ou d'une tension électrique et/ou le circuit de mesure capacitive présentent des contacts électriques (8, 9) par le biais desquels au moins un courant électrique et/ou une tension électrique peut être appliqué(e) à la pointe de pipette ou à la seringue (1, 14) et/ou par le biais desquels le circuit de mesure capacitive peut être connecté à l'enregistreur capacitif de valeurs de mesure (17).

25. Dispositif selon une des revendications 19 à 24, dans lequel les équipements (6, 7, 9) d'application d'un courant électrique et/ou d'une tension électrique et/ou le circuit de mesure capacitive peuvent être connectés via un adaptateur à lit d'aiguilles (19) à la pointe de pipette ou à la seringue (1, 14).

26. Dispositif selon une des revendications 19 à 25, qui présente une partie de dispositif séparable de la pointe de pipette ou la seringue (1, 14) et englobant l'équipement (6, 7, 9) d'application d'un courant électrique et/ou d'une tension électrique et/ou le circuit de mesure capacitive et/ou l'adaptateur à lit d'aiguilles (19).

27. Dispositif selon une des revendications 19 à 26, dans lequel la partie d'équipement séparable (6, 7, 9) est stationnaire et/ou transportable.

28. Dispositif selon la revendications 26 ou 27, dans lequel la partie d'équipement séparable (6, 7, 9) englobe un dispositif de pipetage et un Dispositif de dosage et/ou spectromètre.

29. Dispositif selon une des revendications 19 à 28, dans lequel l'équipement (6, 7, 9) d'application d'un courant électrique et/ou d'une tension électrique présentent une source de courant continu et/ou alternatif et/ou une source de tension continue et/ou alternative.

30. Dispositif selon une des revendications 19 à 29, dans lequel la pointe de pipette ou la seringue (1, 14) et/ou l'équipement (6, 7, 9) d'application d'un courant électrique et/ou d'une tension électrique présente/présentent un ou plusieurs équipements de mesure de température (11, 12, 13).

31. Dispositif selon une des revendications 19 à 30, dans lequel l'équipement (6, 7, 9) d'application d'un courant électrique et/ou d'une tension électrique présente un équipement de pilotage du chauffage de l'échantillon.
